# EUROPEAN PATENT APPLICATION

(11) **EP 3 255 557 A1**
(43) Date of publication of application: **13.12.2017**
(21) Application number: 17152408.5
(22) Date of filing: 20.01.2017
(51) Int. Cl.: G06F 17/22

(54) **DOCUMENT ENCODING**

(30) Priority: 09.06.2016 US 201615178510
(71) Applicant: FUJITSU LIMITED, Kawasaki-shi Kanagawa 211-8588 (JP)
(72) Inventor: Kamiya, Takuki, Sunnyvale, CA 94085 (US)
(74) Representative: Hoffmann Eitle

(57) **Abstract**

A method may include determining that a character event of an extensible markup language (XML) document is untyped. The character event may be associated with a content string including whitespace. The method may further include determining that the character event is associated with an event code having a length of one. In response to determining that the character event is untyped and is associated with the event code having the length of one, the content string may be encoded as an encoded content string, including encoding the whitespace of the content string such that the whitespace of the content string is preserved.

## Description

### FIELD

The embodiments discussed herein are related to document encoding.

### BACKGROUND

Extensible markup language (XML) is a markup language that defines a set of rules for encoding documents in a plain-text format that may be both human-readable and machine-readable. One version of XML is defined in the XML 1.0 Specification produced by the World Wide Web Consortium (W3C) and dated November 26, 2008, which is incorporated herein by reference in its entirety.

An XML schema is a description of a type of XML document, typically expressed in terms of constraints on the structure and content of documents of that type, above and beyond the basic syntactical constraints imposed by the XML 1.0 Specification itself. These constraints are generally expressed using some combination of rules governing the order of elements, Boolean predicates associated with the content, data types governing the content of elements and attributes, and more specialized rules such as uniqueness and referential integrity constraints. An XML document or set of XML documents may include an associated XML schema definition (XSD). The XSD may generally describe the XML schema associated with an XML document.

Efficient XML interchange (EXI) is a binary XML format in which XML documents are encoded in a binary data format rather than plain text. In general, using an EXI format may reduce the size and verbosity of XML documents, and may reduce the time and effort expended to transmit and/or parse XML documents. A formal definition of EXI is described in the EXI Format 1.0 Specification produced by the W3C and dated February 11, 2014, which is incorporated herein by reference in its entirety. An XML document may be encoded in an EXI format as an EXI stream. Additionally, the EXI stream may be decoded to form an XML document similar to or the same as the original XML document.

The subject matter claimed herein is not limited to embodiments that solve any disadvantages or that operate only in environments such as those described above. Rather, this background is only provided to illustrate one example technology area where some embodiments described herein may be practiced.

### SUMMARY

According to an aspect of an embodiment, a method may include determining that a character event of an extensible markup language (XML) document is untyped. The character event may be associated with a content string including whitespace. The method may further include determining that the character event is associated with an event code having a length of one. In response to determining that the character event is untyped and is associated with the event code having the length of one, the content string may be encoded as an encoded content string, including encoding the whitespace of the content string such that the whitespace of the content string is preserved.

The object and advantages of the embodiments will be realized and achieved at least by the elements, features, and combinations particularly pointed out in the claims.

Both the foregoing general description and the following detailed description are exemplary and explanatory and are not restrictive of the claims.

### BRIEF DESCRIPTION OF THE DRAWINGS

Example embodiments will be described and explained with additional specificity and detail through the use of the accompanying drawings.
Figure 1 is a block diagram of an example efficient extensible markup language interchange (EXI) processing system.
Figure 2 illustrates a portion of an example extensible markup language (XML) schema definition (XSD).
Figure 3A illustrates a portion of an example strict EXI grammar.
Figure 3B illustrates a portion of an example non-strict EXI grammar.
Figure 4 is a flowchart of an example method.
Figure 5 is a flowchart of another example method.
Figure 6 illustrates a computing device that can be used on connection with embodiments.

### DESCRIPTION OF EMBODIMENTS

Some efficient extensible markup language interchange (EXI) encoders may attempt to remove whitespaces when encoding extensible markup language (XML) documents. Removing the whitespaces may increase the compactness of an EXI stream resulting from the encoding of the XML document. However, some whitespaces may carry significance for some applications. For example, whitespaces associated with a mixed content model by an XML schema definition (XSD) may carry significance.

Some encoding systems and/or EXI grammar implementations may store a flag in an EXI grammar to identify characters associated with the mixed content model. However, some encoding systems and/or EXI grammar implementations may not employ such flags. Thus, for example, relying on flags to identify mixed content may result in some mixed content not being identified, which may result in the removal of whitespace that may carry significance.

Some embodiments may detect whether a current grammar is associated with the mixed content model without relying on an additional mixed content flag stored in the EXI grammar. Thus, for example, some embodiments may work with EXI grammar implementations that employ a mixed content flag, as well as EXI grammar implementations that may not employ a mixed content flag. Improvements to EXI encoding technology may be realized by facilitating the identification of mixed content and/or whitespace that may carry significance. Identifying mixed content and/or whitespace that may carry significance may permit a system to preserve the whitespace that may carry significance and to remove whitespace that may not carry significance. Thus, for example, compactness in encoding may be facilitated without risking a loss of potentially significant whitespace.

Embodiments will be explained with reference to the accompanying drawings.

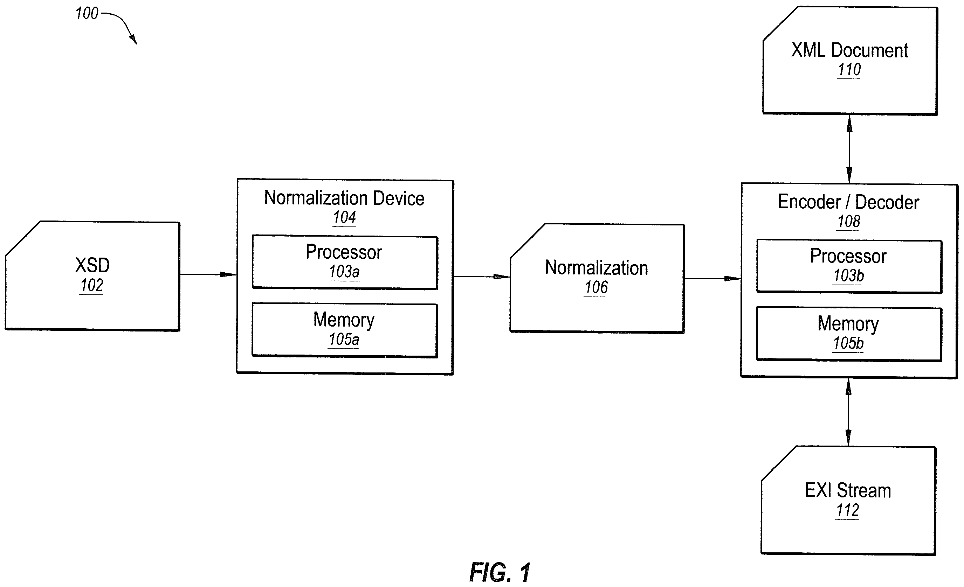

Figure 1 is a block diagram of an example EXI processing system 100. The EXI processing system 100 includes a normalization device 104. The normalization device 104 may be configured to receive an XSD 102. The XSD 102 may generally describe an XML schema associated with an XML document 110 or a set of XML documents.

The normalization device 104 may perform one or more operations of an EXI grammar-generating process and to output a normalization 106. The normalization 106 may include an EXI grammar associated with the XML document 110 described by the XSD 102. The normalization 106 of the XSD 102 may be used, for example, in encoding and/or decoding the XML document 110 and/or XML documents associated with the XSD 102.

The normalization 106 may be communicated to an encoder/decoder 108. An example encoder/decoder 108 may be included in the OpenEXI project hosted at SourceForge.net. The source code and documentation of the OpenEXI project are incorporated herein by reference in their entirety.

The encoder/decoder 108 may be configured to receive an XML document 110 and to encode the XML document 110 as an EXI stream 112. Alternately or additionally, the EXI stream 112 may also be received by the encoder/decoder 108 and decoded as the XML document 110. An original XML document 110 and the XML document 110 generated by the encoder/decoder 108 may include substantially identical XML data. However, certain types of human-readable information, such as whitespace that may not carry significance, comments, and/or processing instructions, may not be preserved by the encoder/decoder 108 depending on associated preservation settings of the encoder/decoder 108.

The normalization device 104 may include a processor 103a and a memory 105a. The encoder/decoder 108 may include a processor 103b and a memory 105b. The memory 105a and the memory 105b may include non-transitory computer-readable media. Instructions such as programming code executable by the processor 103a and the processor 103b may be encoded in the memory 105a and the memory 105b, respectively. When the instructions are executed by the processor 103a and/or the processor 103b, the normalization device 104 and/or the encoder/decoder 108 may perform operations related to and/or including the processes described herein.

The normalization device 104 and/or the encoder/decoder 108 may be employed in a device, such as an embedded device and/or a device with limited memory capacity. Examples of embedded devices and/or devices with limited memory capacity include, but are not limited to, sensors, microcontrollers, and appliances, such as energy management controllers, automobile microcontrollers, smart meters, or the like. The devices may include network-connected devices, such as devices capable of functioning as Internet of Things (IoT) devices or the like. Some embodiments may facilitate encoding and/or EXI stream 112 compactness while maintaining whitespace that may carry significance. Alternately or additionally, some embodiments may function for multiple grammar implementations. For example, some embodiments may function for grammar implementations that may include a unique event type and/or flag for mixed content character strings and for grammar implementations that may not include the unique event type and/or flag for the mixed content character strings.

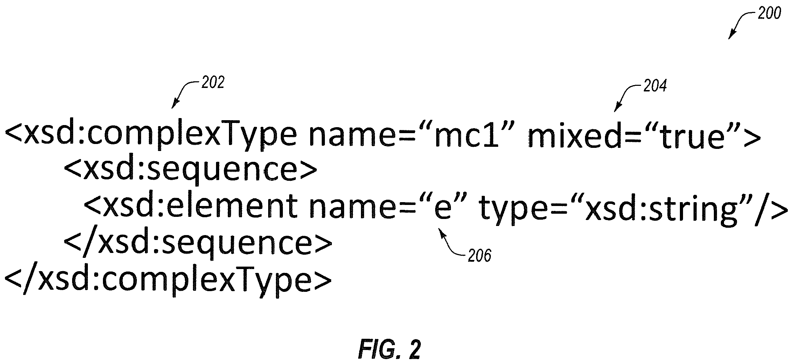

Figure 2 illustrates a portion of an example XSD 200. The XSD 200 may generally correspond to the XSD 102 of Figure 1. The XSD 200 may include a complex type definition 202 having mixed content 204. The complex type definition 202 may include a string-type element 206. The string-type element 206 may be associated with a content string of an associated XML document, which may generally correspond to the XML document 110 of Figure 1.

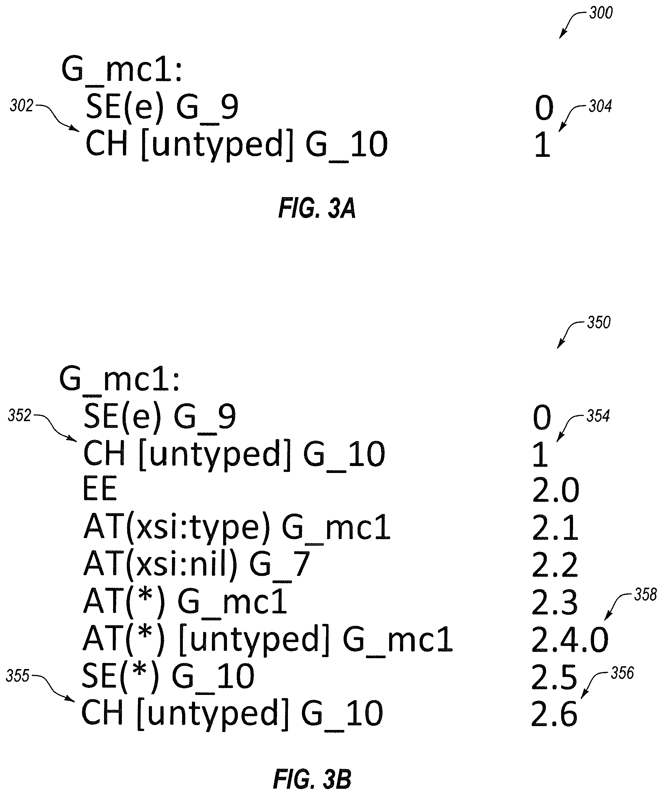

Figure 3A illustrates a portion of an example strict EXI grammar 300. The strict EXI grammar 300 may be compiled from an XSD when a strict mode option is enabled for a grammar compiler. The strict mode option may be associated with a strict mode setting associated with encouraging compactness in the grammar. The strict EXI grammar 300 may be compiled from an XSD by a normalization device generally corresponding, respectively, to the XSD 102 and normalization device 104 of Figure 1.

The strict EXI grammar 300 may be included in a normalization generally corresponding to the normalization 106 of Figure 1. Alternately or additionally, the strict EXI grammar 300 may be referenced by an encoder/decoder to encode/decode an XML document as/from an EXI stream. The encoder/decoder, the XML document, and the EXI stream may generally correspond, respectively, to the encoder/decoder 106, the XML document 110, and the EXI stream 112 of Figure 1.

The strict EXI grammar 300 may include a character (CH) production 302. The CH production 302 may be untyped. The untyped CH production 302 may be associated with an event code 304. The event code 304 may have a length of one. For example, the untyped CH production 302 may be associated with the event code 304 "1."

Figure 3B illustrates a portion of an example non-strict EXI grammar 350. The non-strict EXI grammar 350 may be compiled from an XSD when a strict mode option is not enabled for a grammar compiler. The non-strict mode option may be described as a default mode. The default mode may relax some of the encouragements for compactness in the grammar that may be present when the strict mode option is enabled. The non-strict EXI grammar 350 may be compiled from an XSD by a normalization device generally corresponding, respectively, to the XSD 102 and normalization device 104 of Figure 1.

The non-strict EXI grammar 350 may be included in a normalization generally corresponding to the normalization 106 of Figure 1. Alternately or additionally, the non-strict EXI grammar 350 may be referenced by an encoder/decoder to encode/decode an XML document as/from an EXI stream. The encoder/decoder, the XML document, and the EXI stream may generally correspond, respectively, to the encoder/decoder 106, the XML document 110, and the EXI stream 112 of Figure 1.

The non-strict EXI grammar 350 may include a CH production 352. The CH production 352 may be untyped. The untyped CH production 352 may be associated with an event code 304. The event code 304 may have a length of one. For example, the untyped CH production 302 may be associated with the event code 304 "1."

The non-strict EXI grammar 350 may include untyped CH productions associated with event codes having a length greater than one. For example, the non-strict EXI grammar 350 may include a production 355 associated with an event code 356 having a length of two. As used herein, the lengths of the event codes may correspond to a number of digits included in the event codes. The non-strict EXI grammar 350 may include productions associated with other event code lengths. For example, the non-strict EXI grammar 350 may include a production associated with an event code 358 having a length of three or event codes having a length greater than three.

Thus, for example, compiling an XSD including a complex type definition having mixed content, such as the XSD 200 of Figure 2, may generate a strict or non-strict EXI grammar having a CH production classified as untyped and associated with an event code having a length of one. In some embodiments, an encoder/decoder, such as the encoder/decoder 108 of Figure 1, may identify untyped character events associated with event codes having a length of one and may preserve whitespace in counterpart content strings during encoding.

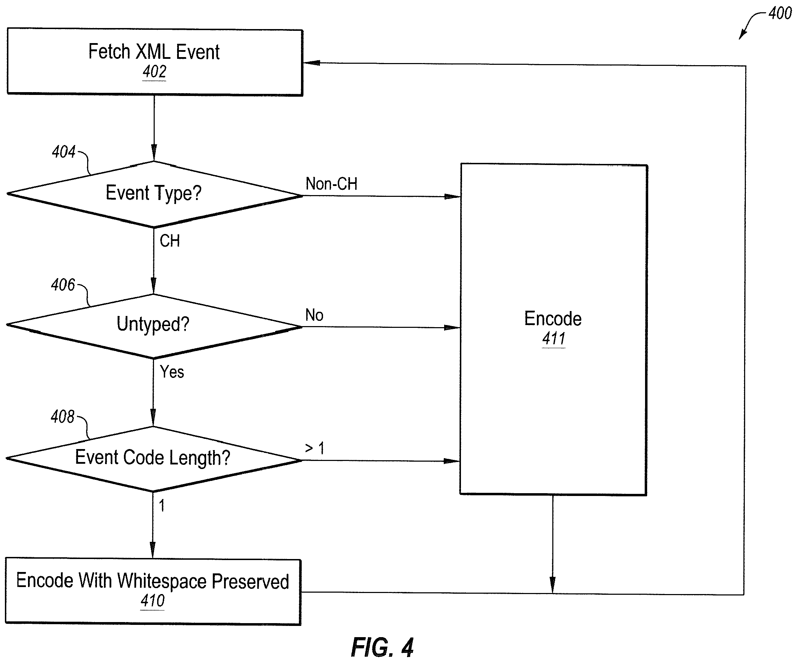

Figure 4 is a flowchart of an example method 400. The method 400 may be performed by an EXI encoder, such as the encoder/decoder 108 of Figure 1.

The method 400 may begin at block 402 by fetching an XML event. The XML event may correspond to an entry of a normalization, which may generally correspond to the normalization 106 of Figure 1. The XML event may correspond to an entry of an EXI grammar included in the normalization. For example, the XML event may correspond to the CH production 302 of Figure 3A, the CH production 352 of Figure 3B, or any other production of the strict EXI grammar 300 of Figure 3A or the non-strict EXI grammar 350 of Figure 3B.

The method 400 may continue to block 404 by determining an event type of the fetched XML event. If the fetched XML event has a non-CH event type, the method 400 may continue to block 411 by encoding the non-CH content associated with the XML event. For example, content of an XML document, such as the XML document 110 of Figure 1, associated with the fetched XML event may be encoded according to the fetched XML event type.

If the fetched XML event has a CH event type, the method 400 may continue to block 406 by determining whether the fetched XML CH event is untyped. If the fetched XML CH event is not untyped, e.g., if the fetched XML CH event is typed, the method may continue to block 411 by encoding the CH content associated with the XML event. For example, a content string of an XML document, such as the XML document 110 of Figure 1, associated with the fetched XML typed CH event may be encoded according to typed encoding. By way of example, the content string may be encoded according to section 7.1 and/or any other appropriate section of the EXI Format 1.0 Specification.

If the fetched XML CH event is untyped, the method 400 may continue to block 408 by determining an event code length. If the fetched XML untyped CH event has an event code length greater than 1, the method 400 may continue to block 411 by encoding the CH content associated with the XML event. For example, a content string of an XML document, such as the XML document 110 of Figure 1, associated with the fetched CH untyped XML event may be encoded according to heuristics. The heuristics may depend on a processor and may remove whitespaces in the encoding process. By way of example, leading and/or trailing whitespaces of the content string may be trimmed as part of the encoding process.

If the fetched XML untyped CH event has an event code length equal to one, the method 400 may continue to block 410 by encoding the CH content associated with the XML event such that the whitespace is preserved. For example, a content string of an XML document, such as the XML document 110 of Figure 1, associated with the fetched CH untyped XML event having an event code length of one may be encoded to include the whitespace of the content string.

The method 400 may return to block 402 from block 410 or block 411 if more XML events are available to fetch.

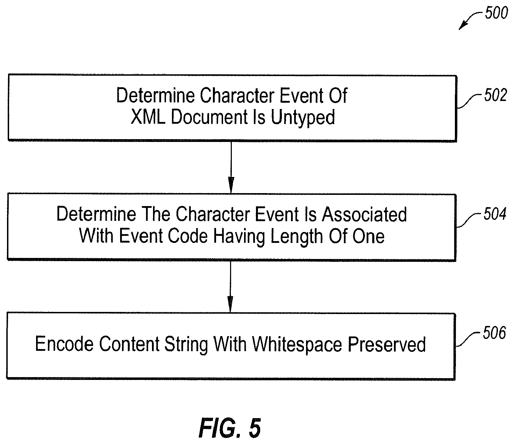

Figure 5 is a flowchart of another example method 500. The method 500 may be performed by an EXI encoder, such as the encoder/decoder 108 of Figure 1. The method 500 may begin at block 502 by determining that a character event of an XML document is untyped. The character event may be associated with a content string including whitespace. The XML document may generally correspond to the XML document 110 of Figure 1. In some embodiments, the character event of the XML document may be identified as untyped according to a normalization associated with the XML document. The normalization may generally correspond to the normalization 106 of Figure 1 and may include an EXI grammar associated with the XML document.

The method 500 may continue to block 504 by determining that the character event is associated with an event code having a length of one.

The method 500 may continue to block 506 by encoding the content string with the whitespace of the content string preserved. The whitespace may be preserved in response to determining that the character event is untyped and is associated with the event code having a length of one. Thus, for example, the whitespace of the content string may be encoded such that the whitespace of the content string is preserved.

For this and other processes and methods disclosed herein, the functions performed in the processes and methods may be implemented in differing order. Furthermore, the outlined operations are provided only as examples, and some of the operations may be optional, combined into fewer operations, or expanded into additional operations without detracting from the essence of the embodiments.

For example, in some embodiments, the method 500 may further include fetching an XML event of the XML document. The XML event may be associated with the character event. Alternately or additionally, the XML event may be fetched from an EXI grammar associated with the XML document. For example, a normalization may include the EXI grammar associated with the XML document. In some embodiments, the EXI grammar may include a mixed content flag associated with the XML event. Alternately, the EXI grammar may not include a mixed content flag associated with the XML event.

In some embodiments, the method 500 may further include determining that the XML event is associated with a character event type.

In some embodiments, the method 500 may further include determining that a second character event of the XML document is untyped. The second character event may be associated with a second content string including whitespace. The method 500 may further include determining that the second character event includes an event code having a length greater than one. The method 500 may further include encoding the second content string as a second encoded content string such that that the whitespace of the second content string is not preserved. The second content string may be encoded without preserving the whitespace in response to determining that the second character event is untyped and includes the event code having a length greater than one.

Alternately or additionally, the method 500 may include fetching a second XML event of the XML document. The method 500 may further include determining that the second XML event is associated with a character event type.

In some embodiments, the method 500 may further include transmitting an EXI stream including the encoded content string including the preserved whitespace and the second encoded content string without preserved whitespace.

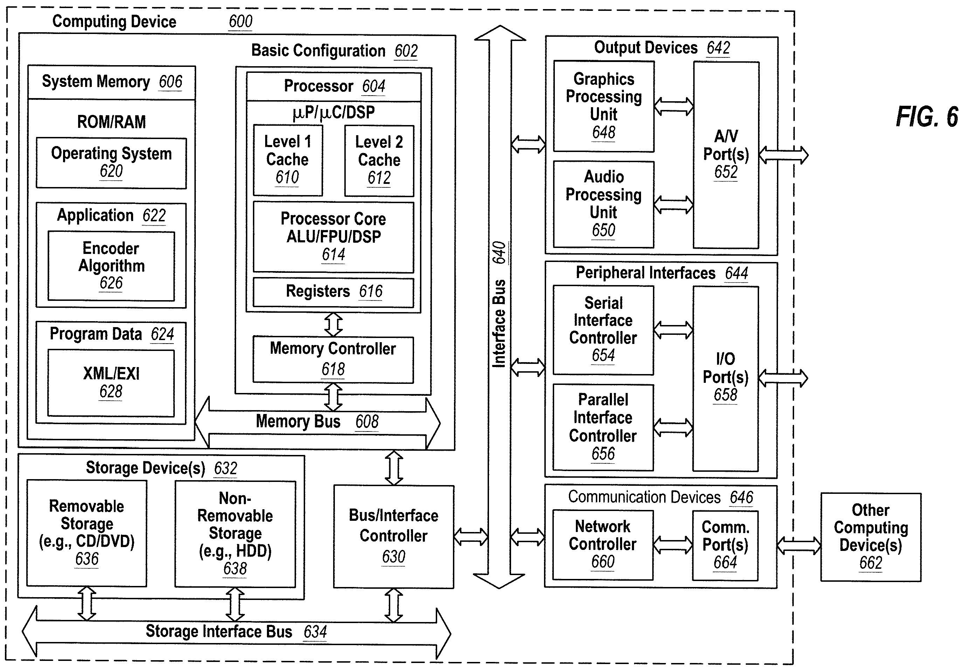

Figure 6 is a block diagram illustrating an example computing device 600. The computing device may be arranged to encode XML documents in accordance with the present disclosure. The computing device 600 may be one example of an embodiment of the normalization device 104 and/or the encoder/decoder 106 of Figure 1. In a configuration 602, the computing device 600 typically includes one or more processors 604 and a system memory 606. The processor 604 and/or the memory 606 may generally correspond to the processor 103a, the processor 103b, the memory 105a, and/or the memory 105b of the normalization device 104 and/or the encoder/decoder 106 of Figure 1. A memory bus 608 may be used for communicating between the processor 604 and the system memory 606.

Depending on the desired configuration, the processor 604 may be of any type including but not limited to a microprocessor (µP), a microcontroller (µC), a digital signal processor (DSP), or any combination thereof. The processor 604 may include one more levels of caching, such as a level one cache 610 and a level two cache 612, a processor core 614, and registers 616. An example processor core 614 may include an arithmetic logic unit (ALU), a floating point unit (FPU), a digital signal processing core (DSP Core), or any combination thereof. An example memory controller 618 may also be used with the processor 604, or in some implementations the memory controller 618 may be an internal part of the processor 604.

Depending on the desired configuration, the system memory 606 may be of any type including but not limited to volatile memory, such as Random Access Memory (RAM); non-volatile memory, such as Read Only Memory (ROM), flash memory, etc.; or any combination thereof. The system memory 606 may include an operating system 620, one or more applications 622, and program data 624. The application 622 may include an encoder algorithm 626 that may be arranged to perform the functions as described herein including those described with respect to the normalization device 104 and/or the encoder/decoder 108 of Figure 1, the method 400 of Figure 4, and/or the method 500 of Figure 5. The program data 624 may include XML/EXI data 628 that may be useful for operation with the goal management algorithm 626 as is described herein, such as the XSD 102, the normalization 106, the XML document 110, and/or the EXI stream 112 of Figure 1, an XSD generally corresponding to the XSD 200 of Figure 2, and/or an EXI grammar generally corresponding to the strict EXI grammar 300 of Figure 3A and/or the non-strict EXI grammar 350 of Figure 3B. In some embodiments, the application 622 may be arranged to operate with the program data 624 on the operating system 620 such that a mixed content string may be encoded as described herein.

The computing device 600 may have additional features or functionality, and additional interfaces to facilitate communications between the basic configuration 602 and other devices and interfaces. For example, a bus/interface controller 630 may be used to facilitate communications between the basic configuration 602 and one or more data storage devices 632 via a storage interface bus 634. The data storage devices 632 may be removable storage devices 636, non-removable storage devices 638, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

The system memory 606, the removable storage devices 636, and the non-removable storage devices 638 are examples of computer storage media. Computer storage media includes, but is not limited to, RAM, ROM, Electronically Erasable and Programmable Read Only Memory (EEPROM), flash memory or other memory technology, Compact Disc-Read Only Memory (CD-ROM), digital versatile disks (DVD) or other optical storage, magnetic cassettes, magnetic tape, magnetic disk storage or other magnetic storage devices, or any other medium which may be used to store the desired information and which may be accessed by computing device 600. Any such computer storage media may be part of computing device 600.

Computing device 600 may also include an interface bus 640 for facilitating communication from various interface devices (e.g., output devices 642, peripheral interfaces 644, and communication devices 646) to the basic configuration 602 via the bus/interface controller 630. Example output devices 642 include a graphics processing unit 648 and an audio processing unit 650, which may be configured to communicate to various external devices such as a display or speakers via one or more A/V ports 652. Example peripheral interfaces 644 include a serial interface controller 654 or a parallel interface controller 656, which may be configured to communicate with external devices such as input devices (e.g., keyboard, mouse, pen, voice input device, touch input device, etc.) or other peripheral devices (e.g., printer, scanner, etc.) via one or more input/output (I/O) ports 658. An example communication device 646 includes a network controller 660, which may be arranged to facilitate communications with one or more other computing devices 662 over a network communication link via one or more communication ports 664.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

The computing device 600 may be implemented as a portion of a small-form factor portable (or mobile) electronic device such as a cell phone, a tablet computer, a smartphone, a smartwatch, smart glasses, a personal data assistant (PDA), a personal media player device, a wireless web-watch device, a personal headset device, an application specific device, or a hybrid device that include any of the above functions. The computing device 600 may also be implemented as a personal computer including both laptop computer and non-laptop computer configurations. The computing device 600 may also be implemented as an embedded device or the like.

All examples and conditional language recited herein are intended for pedagogical objects to aid the reader in understanding the embodiments and the concepts contributed to furthering the art, and are to be construed as being without limitation to such specifically recited examples and conditions. Although embodiments have been described in detail, it should be understood that the various changes, substitutions, and alterations could be made hereto without departing from the scope of the embodiments.

## Claims

1. A method comprising:
determining that a character event of an extensible markup language (XML) document is untyped, the character event associated with a content string including whitespace;
determining that the character event is associated with an event code having a length of one; and
in response to determining that the character event is untyped and is associated with the event code having the length of one, encoding the content string as an encoded content string, including encoding the whitespace of the content string such that the whitespace of the content string is preserved.

2. The method of claim 1, further comprising fetching an XML event associated with the XML document, the XML event further associated with the character event.

3. The method of claim 2, further comprising determining that the XML event is associated with a character event type.

4. The method of claim 2, wherein the XML event is fetched from an efficient XML interchange (EXI) grammar associated with the XML document.

5. The method of claim 4, wherein the EXI grammar includes a mixed content flag associated with the XML event.

6. The method of claim 4, wherein the EXI grammar does not include a mixed content flag associated with the XML event.

7. The method of claim 2, wherein the XML event includes a first XML event, the character event includes a first character event, the content string includes a first content string, and the encoded content string includes a first encoded content string, the method further comprising:
determining that a second character event of the XML document is untyped, the second character event associated with a second content string including whitespace;
determining that the second character event includes an event code having a length greater than one; and
in response to determining that the second character event is untyped and includes the event code having a length greater than one, encoding the second content string as a second encoded content string such that the whitespace of the second content string is not preserved.

8. The method of claim 7, further comprising fetching a second XML event associated with the XML document.

9. The method of claim 8, further comprising determining that the second XML event is associated with a character event type.

10. The method of claim 7, further comprising transmitting an EXI stream including the first encoded content string and the second encoded content string.

11. A non-transitory computer-readable medium having encoded therein programing code executable by a processor to perform operations comprising:
determining that a character event of an extensible markup language (XML) document is untyped, the character event associated with a content string including whitespace;
determining that the character event is associated with an event code having a length of one; and
in response to determining that the character event is untyped and is associated with the event code having the length of one, encoding the content string as an encoded content string, including encoding the whitespace of the content string such that the whitespace of the content string is preserved.

12. The computer-readable medium of claim 11, the operations further comprising fetching an XML event associated with the XML document, the XML event further associated with the character event.

13. The computer-readable medium of claim 12, the operations further comprising determining that the XML event is associated with a character event type.

14. The computer-readable medium of claim 12, wherein the XML event is fetched from an efficient XML interchange (EXI) grammar associated with the XML document.

15. The computer-readable medium of claim 14, wherein the EXI grammar includes a mixed content flag associated with the XML event.

16. The computer-readable medium of claim 14, wherein the EXI grammar does not include a mixed content flag associated with the XML event.

17. The computer-readable medium of claim 12, the XML event includes a first XML event, the character event includes a first character event, the content string includes a first content string, and the encoded content string includes a first encoded content string, the operations further comprising:
determining that a second character event of the XML document is untyped, the second character event associated with a second content string including whitespace;
determining that the second character event includes an event code having a length greater than one; and
in response to determining that the second character event is untyped and includes the event code having a length greater than one, encoding the second content string as a second encoded content string such that the whitespace of the second content string is not preserved.

18. The computer-readable medium of claim 17, the operations further comprising fetching a second XML event associated with the XML document.

19. The computer-readable medium of claim 18, the operations further comprising determining that the second XML event is associated with a character event type.

20. The computer-readable medium of claim 19, the operations further comprising transmitting an EXI stream including the first encoded content string and the second encoded content string.
